# EUROPÄISCHE PATENTSCHRIFT

(11) **EP 3 439 746 B1**
(45) Veröffentlichungstag und Bekanntmachung des Hinweises auf die Patenterteilung: **10.12.2025**
(21) Anmeldenummer: 17717357.2
(22) Anmeldetag: 06.04.2017
(51) Int. Cl.: A62C 35/02, A62C 13/64, A62C 13/76, A62C 35/68

(54) **SCHNELLÖFFNUNGSVENTIL FÜR EINEN DRUCKBEAUFSCHLAGTEN LÖSCHFLUIDBEHÄLTER, UND LÖSCHFLUIDBEHÄLTER MIT SELBIGEM**
RAPID-ACTION VALVE FOR A PRESSURIZED EXTINGUISHING FLUID CONTAINER, AND EXTINGUISHING FLUID CONTAINER COMPRISING SAME
VANNE À OUVERTURE RAPIDE DESTINÉE À UN RÉSERVOIR DE FLUIDE D'EXTINCTION SOUMIS À UNE PRESSION ET RÉSERVOIR DE FLUIDE D'EXTINCTION MUNI DE LADITE VANNE

(30) Priorität: 07.04.2016 DE 102016205772
(43) Veröffentlichungstag der Anmeldung: 13.02.2019
(73) Patentinhaber: Minimax GmbH, 23843 Bad Oldesloe (DE)
(72) Erfinder: FELBERG, Jan, 23560 Lübeck (DE); HABITZL, Wolfgang, 2440 Neumitterndorf (AT)
(74) Vertreter: Eisenführ Speiser
(86) Internationale Anmeldenummer: PCT/EP2017/058282
(87) Internationale Veröffentlichungsnummer: WO 2017/174740

(56) Entgegenhaltungen:
- EP-A1- 0 033 062
- EP-A1- 0 033 062
- EP-A1- 0 033 062
- EP-A1- 2 428 714
- EP-A1- 2 428 714
- EP-A1- 2 428 714
- EP-A2- 0 380 852
- EP-A2- 0 380 852
- WO-A1-2006/110148
- WO-A1-2006/110148
- WO-A1-2006/110148
- WO-A1-98/26876
- WO-A1-98/26876
- WO-A1-98/26876
- DE-U1- 202007 006 631
- DE-U1- 202007 006 631
- DE-U1- 202007 006 631
- US-B2- 8 312 893
- US-B2- 8 733 737

## Beschreibung

Die vorliegende Erfindung betrifft einen Löschfluidbehälter gemäß den Merkmalen des Oberbegriffs von Anspruch 1.

Unter dem Begriff des Schnellöffnungsventils wird erfindungsgemäß insbesondere ein Gasflaschen-Schnellöffnungsventil im Einklang mit DIN EN ISO 17871 verstanden, oder mit einer entsprechenden Norm. Unter einem Schnellöffnungsventil werden all jene Ventile verstanden, die in Abgrenzung zu konventionellen Gasflaschen- oder anderen Ventilen das druckbeaufschlagte Fluid in sehr kurzer Zeit zur Verfügung stellen müssen. Besonders bevorzugt kommen erfindungsgemäße Schnellöffnungsventile an stationären druckbeaufschlagten Löschfluidbehältern zum Einsatz.

Bekannte Schnellöffnungsventile weisen einen Löschfluideinlass und einen Löschfluidauslass auf, sowie eine Strömungskammer, die sich vom Löschfluideinlass zum Löschfluidauslass hin erstreckt. Zur Abgrenzung zwischen einem Ruhezustand des Löschfluidbehälters und einem Auslösezustand des Löschfluidbehälters weisen die bekannten Schnellöffnungsventile einen Ventilkolben und einen Ventilsitz auf, wobei der Ventilkolben zwischen einer Freigabestellung und einer Sperrstellung derart hin- und herbewegbar ist, dass der Ventilkolben und der Ventilsitz in der Sperrstellung fluiddicht aneinander anliegen, und in der Freigabestellung voneinander beabstandet sind, so dass der Löschfluideinlass und der Löschfluidauslass fluidleitend miteinander verbunden sind.

EP 0 033 062 A1 offenbart eine Schnellöffnungsvorrichtung, umfassend einen Stahlzylinder mit einem Löschfluideinlass und einem Löschfluidauslass, wobei innerhalb des Stahlzylinders ein Verschlusselement angeordnet ist. Das Verschlusselement wird mittels eines Berstzylinders in einem Einlassbereich der Vorrichtung in abdichtender Sperrstellung gehalten.

US 8,312,893 B2 bezieht sich auf ein Axialwiderstands-Steuerventil zum Einstellen einer Fluidströmungsrate durch das Ventil. Das Ventil 10 weist einen Fluideinlass und einen Fluidauslass und eine sich zwischen Fluideinlass und Fluidauslass erstreckende Strömungskammer auf. Innerhalb der Strömungskammer ist ein Kolbengehäuse vorhanden, innerhalb dessen ein Ventilkolben zwischen einer Sperrstellung und einer Freigabestellung hin- und herbewegbar ist, wobei mit einem Ende des Ventilkolbens ein Kolbenkopf gekoppelt ist, der zu beiden Seiten über Steuerleitungen zum Steuern der Ventilkolben-Stellung mit Luft beaufschlagt wird.

Erfindungsgemäß werden unter dem Begriff Ventil jene Vorrichtungen verstanden, die zerstörungsfrei und reversibel, also ohne Austausch / Reparatur von Funktionsteilen zwischen Freigabestellung und Sperrstellung hin und hergeschaltet werden können. Vorrichtungen, die die fluidleitende Verbindung mittels zerstörbaren Berstelementen, etwa Berstscheiben oder dergleichen, trennen und nach einmaliger Freigabe nur nach Ersatz des zerstörten Berstelements wiederverwendet werden können, sind nicht als Ventile zu verstehen.

Bei den bekannten Schnellöffnungsventilen sind der Löschfluideinlass und der Löschfluidauslass relativ zueinander üblicherweise in einem rechten Winkel angeordnet. Das im Auslösefall aus dem Löschfluidbehälter ausströmende Löschfluid wird beim Durchströmen des Schnellöffnungsventils um diesen entsprechenden Winkel umgelenkt, bevor es aus dem Ventil austritt. In bestimmten Situationen kann dies dazu führen, dass auf den Löschfluidbehälter, an dem das Schnellöffnungsventil angebracht ist, ein seitlicher Impuls ausgeübt wird, der eine Bewegung des Löschfluidbehälters, schlimmstenfalls ein Umfallen oder unkontrolliertes Herumwirbeln erzeugt. Dies wird als Sicherheitsrisiko gesehen.

Demzufolge lag der Erfindung die Aufgabe zugrunde, einen Löschfluidbehälter der eingangs bezeichneten Art dahingehend zu verbessern, dass die Betriebssicherheit verbessert wird.

Die Erfindung löst die ihr zugrunde liegende Aufgabe bei einem Löschfluidbehälter der eingangs bezeichneten Art gemäß einem ersten Aspekt, indem das Schnellöffnungsventil gemäß Anspruch 1 ausgebildet ist. Dabei sind der Löschfluideinlass und der Löschfluidauslass im Wesentlichen parallel zueinander ausgerichtet sind. Vorzugsweise sind der Löschfluideinlass und der Löschfluidauslass koaxial zueinander ausgerichtet. Die Erfindung folgt hierbei dem Ansatz, dass die Standsicherheit, und insbesondere damit die Betriebssicherheit eines Löschfluidbehälters verbessert wird, wenn das aus dem Schnellöffnungsventil austretende Löschfluid keinen seitlichen Bewegungsimpuls, relativ zur Längsachse des Löschfluidbehälters, erzeugt. Unter der Längsachse des Löschfluidbehälters wird hierbei die Richtung verstanden, in welcher das Löschfluid aus dem Löschfluidbehälter austritt. Bei standardmäßigen Löschfluidbehältern, die in Form von Gasflaschen ausgebildet sind und rotationssymmetrisch sind, wird hierbei die Rotationsachse verstanden, die bei montiertem Zustand des Schnellöffnungsventils auf dem Löschfluidbehälter zugleich koaxial mit einer Mittenachse des Löschfluideinlasses ist. Der durch den Austritt des Löschfluids aus dem Schnellöffnungsventil erzeugte Bewegungsimpuls wirkt bei der parallelen, insbesondere koaxialen Ausrichtung von Löschfluideinlass und Löschfluidauslass somit in Längsrichtung des Löschfluidbehälters und wird von der Standfläche des Löschfluidbehälters aufgefangen. Ein unkontrolliertes Umherwirbeln oder seitliches Bewegen des Löschfluidbehälters wird hierdurch weitgehend vermieden.

Vorzugsweise weist das Schnellöffnungsventil ein Rückstellmittel auf, welches mit dem Ventilkolben wirkverbunden und dazu eingerichtet ist, eine Rückstellkraft in Richtung der Sperrstellung auf den Ventilkolben aufzubringen.

Das vorzugsweise vorgesehene Rückstellmittel umfasst in einer bevorzugten Weiterbildung eine Feder, insbesondere eine vorgespannte Feder.

Gemäß der Erfindung ist der Ventilkolben innerhalb der Strömungskammer angeordnet und im Wesentlichen parallel, insbesondere koaxial zu dem Löschfluideinlass und Löschfluidauslass bewegbar. Dies führt im Vergleich zu konventionellen Schnellöffnungsventilen zu einer deutlichen Reduktion der Bauhöhe, da bei konventionellen Schnellöffnungsventilen der Kolben zumindest teilweise außerhalb der Strömungskammer angeordnet ist.

Erfindungsgemäß weist das Schnellöffnungsventil ein Kolbengehäuse auf, in dem der Ventilkolben beweglich, insbesondere verschiebbar, gelagert ist, wobei das Kolbengehäuse derart in der Strömungskammer angeordnet ist, dass es in der Freigabestellung des Ventilkolbens von Löschfluid umströmt wird. Zwischen einer Außenwand der Strömungskammer und dem Kolbengehäuse ist vorzugsweise ein im Wesentlichen ringförmiger Strömungskanal ausgebildet. Besonders bevorzugt weist der Strömungskanal entlang seines Verlaufs zumindest abschnittsweise, vorzugsweise über wenigstens zwei Drittel seiner Länge und/oder seines Umfangs, eine konstante freie Querschnittsfläche auf. Das Kolbengehäuse wird weiter vorzugsweise mittels mindestens eines Haltestegs mit dem Ventilkörper verbunden. Der Haltesteg erstreckt sich insbesondere durch den ansonsten ringförmigen Strömungskanal hindurch. Die Haltestege sind vorzugsweise in Strömungsrichtung tropfenförmig ausgebildet, um einen möglichst geringen Strömungswiderstand zu erzeugen. Alternativ zu einer Tropfenform wird beispielsweise eine ovale, parabelförmige, ellipsoide oder zylindrische Form der Haltestege bevorzugt.

Gemäß einer bevorzugten Ausführungsform weist der Ventilkolben eine dem Löschfluideinlass zugewandte Fläche auf, die in der Freigabestellung nicht aus der den Ventilkolben umgebenen Fläche des Kolbengehäuses vorsteht. Die Fläche des Ventilkolbens schließt vorzugsweise bündig mit der umgebenen Fläche des Kolbengehäuses ab, und geht besonders bevorzugt stetig im Sinne von knickfrei in die Fläche des Kolbengehäuses über. Hierdurch wird erreicht, dass das in das Schnellöffnungsventil im geöffneten einströmende Löschfluid möglichst verwirbelungs-arm am Ventilkolben und der umgebenen Fläche des Kolbengehäuses vorbeiströmen kann.

Die dem Löschfluideinlass zugewandte Fläche des Ventilkolbens ist vorzugsweise konvex gewölbt. Weiter vorzugsweise ist das Kolbengehäuse abschnittsweise oder vollständig konvex gewölbt. Besonders bevorzugt weist das Kolbengehäuse eine tropfenförmige äußere Kontur auf. Auch dies folgt dem Ansatz, das Kolbengehäuse möglichst strömungsoptimiert im Inneren der Strömungskammer auszubilden.

Hierdurch wird zugleich ein Schnellöffnungsventil erreicht, welches einen sehr geringen Druckverlust zwischen Löschfluideinlass und Löschfluidauslass aufweist, was eine zügige Ausbringung des Löschfluids begünstigt.

Gemäß der Erfindung ist der Ventilkolben als Differenzdruckkolben ausgebildet. Unter Differenzdruckkolben wird hierbei verstanden, dass der Kolben eine erste und zweite Kolbenfläche mit unterschiedlicher Flächengröße (projiziert in Wirkrichtung des Kolbens) aufweist, auf die jeweils der gleiche Druck wirkt, vorzugsweise indem die beiden Kolbenflächen in Räumen liegen, die fluidleitend miteinander in Verbindung stehen. Erfindungsgemäß ist der Ventilkolben derart ausgebildet, dass die dem Löschfluideinlass zugewandte Fläche des Ventilkolbens eine erste Fläche ist, und der Ventilkolben eine dem Löschfluideinlass abgewandte zweite Fläche aufweist, welche größer als die erste Fläche ist, wobei die zweite Fläche eine Kolbenkammer begrenzt, die mittels einer Druckausgleichsleitung mit dem Löschfluideinlass verbunden ist. Aufgrund der größeren Ausbildung der zweiten Fläche entsteht eine resultierende Kraft auf den Löschfluideinlass zu. Dies entspricht einer Kraft in Richtung der Sperrstellung des Ventilkolbens. Die Ausbildung des Ventilkolbens als Differenzdruckkolben stellt somit ein bevorzugtes (weiteres) Rückstellmittel dar, welches ein zuverlässiges Sperren des Ventils ermöglicht.

In einer weiteren bevorzugten Ausgestaltung weist der Ventilsitz des Schnellöffnungsventils eine Radialsitzfläche auf, und der Ventilkolben weist ein Radialdichtelement auf, welches dazu eingerichtet ist, in der Sperrstellung fluiddicht an der Radialsitzfläche des Ventilsitzes anzuliegen.

Das Radialdichtelement ist vorzugsweise in der Freigabestellung des Ventilkörpers vollständig innerhalb des Kolbengehäuses angeordnet. Ein übermäßiger Verschleiß des Radialdichtelements und ein unbeabsichtigtes Beschädigen, welches zu Verstopfungen und Funktionsstörungen führen könnte, wird hierdurch zuverlässig ausgeschlossen.

In einer weiteren bevorzugten Ausführungsform der Erfindung ist in dem Kolbengehäuse eine Überdruckleitung vorgesehen, welche sich von der Seite des Löschfluideinlasses zur Seite des Löschfluidauslasses hin erstreckt, und mittels einer Überdruck-Sicherheitseinrichtung gegen Fluiddurchtritt verschlossen ist. Unter der Überdruck-Sicherheitseinrichtung wird eine Sicherheitseinrichtung gegen Überdruck verstanden.

Gemäß einer Weiterbildung des erfindungsgemäßen Löschfluidbehälters ist die Überdruckleitung dazu eingerichtet, nach Auslösen der Überdruck-Sicherheitseinrichtung den Überdruck in Richtung des Löschfluidauslasses abzuleiten. Damit wird es möglich, nach Auslösen der Überdruck-Sicherheitseinrichtung das in einem Löschfluidbehälter befindliche Löschfluid, an dem das erfindungsgemäße Schnellöffnungsventil montiert ist, nicht in die Umgebung, sondern in den an das Schnellöffnungsventil angeschlossenen Löschmittelpfad, insbesondere eine Löschfluidleitung, abzuführen. Damit wird eine Kontamination der Umgebung und gegebenenfalls Gefährdung von Personen, die sich in der Umgebung der auslösenden Überdruck-Sicherheitseinrichtung befinden, vermieden.

Vorzugsweise ist die Überdruck-Sicherheitseinrichtung als Berstelement ausgebildet. Beispielsweise wird als Berstelement eine Berstscheibe, Berstkappe, Berstschraube oder Berstfassung verwendet. Bei Überschreiten eines vorbestimmten Überdrucks auf Seiten des Löschfluideinlasses versagt das Berstelement und gibt die Überdruckleitung frei, durch welche dann ungeachtet der Stellung des Ventilkörpers Löschfluid zum Löschfluidauslass hin entweichen kann.

Überdrücke entstehen typischerweise, wenn der Löschfluidbehälter stark erhitzt wird. Nach dem Überschreiten einer kritischen Temperatur wird ein Auslösen der Überdruck-Sicherheitseinrichtung erreicht, so dass Löschfluid in Richtung der angeschlossenen Sprinkleranlage ausgegeben. Dieses kann dann gleichmäßig über die Düsen der Sprinkleranlage im Raum verteilt werden, bevor die eigentliche Aktivierung der Löschanlage durch z.B. eine Auslöseeinrichtung erfolgt.

Vorzugsweise ist der Ventilkolben als Hohlkolben ausgebildet, und die Überdruckleitung erstreckt sich durch den Hohlkolben hindurch. Vorzugsweise bildet also der Hohlkolben einen Teil der Überdruckleitung aus. Alternativ oder zusätzlich nimmt der Hohlkolben einen Versorgungskolben auf, welcher fluidleitend mit dem Löschfluideinlass verbunden ist. Die Überdruck-Sicherheitseinrichtung ist vorzugsweise am dem Löschfluideinlass gegenüberliegenden Ende des Versorgungskanals zum Löschfluidauslass hin angeordnet.

Gemäß einer bevorzugten Ausführungsform weist das Kolbengehäuse mindestens eine Aufnahme für den bewegbaren Ventilkolben auf, wobei die Überdruckleitung sich durch die Aufnahme hindurch erstreckt. Neben dem Ventilkolben weist auch das den Ventilkolben aufnehmende Kolbengehäuse mindestens einen Abschnitt der sich vom Löschfluideinlass in Richtung des Löschfluidauslasses erstreckenden Überdruckleitung auf. Bevorzugt ist die Aufnahme für den bewegbaren Ventilkolben als Rohrabschnitt ausgeführt, mittels dem der Ventilkolben beweglich in Längsrichtung des Rohrabschnittes geführt und von seiner Sperrstellung in seine Freigabestellung überführt wird. Zudem ermöglicht die Aufnahme das Leiten des in der Überdruckleitung anstehenden Löschfluids.

Vorzugsweise weist die Überdruckleitung einen oder mehrere Leitungsabschnitte auf, der oder die koaxial zur Mittenachse des Ventilkolbens und/oder des Kolbengehäuses verläuft oder verlaufen. Bevorzugt wird die Überdruckleitung durch einen Versorgungskolben des Ventilkolbens, die als Rohrkörper ausgebildete Aufnahme und einen Niederhalter für insbesondere das Berstelement in der Überdruckleitung ausgebildet, wobei der Niederhalter ebenfalls mindestens einen Durchgang für das Löschfluid umfasst. Ferner ist vorgesehen, dass im Kolbengehäuse parallel zum Niederhalter weitere Durchgänge und Bohrungen in einem Abströmkörper des Kolbengehäuses vorgesehen sind, die in einer Ausführungsform ebenfalls Abschnitte der Überdruckleitung ausbilden. Damit wird ein sicheres Ableiten des Löschfluids nach Auslösen der Überdruck-Sicherheitseinrichtung erzielt.

Durch das Anordnen bzw. Ausbilden der Überdruckleitung im Schnellöffnungsventil wird verhindert, dass nach Auslösen der Überdruck-Sicherheitseinrichtung innerhalb des Schnellöffnungsventils Bewegungsimpulse quer zur Strömungsrichtung des vom Löschfluideinlass in Richtung des Löschfluidauslasses des Schnellöffnungsventiles strömenden Löschfluid entstehen. Auch beim Auslösen der Überdruck-Sicherheitseinrichtung hat dann der Austritt des Löschfluids in Richtung des Löschfluidauslasses keinen Einfluss auf die Standsicherheit des Löschfluidbehälters.

In einer weiteren bevorzugten Ausführungsform weist das Schnellöffnungsventil ein Entlüftungsventil auf sowie eine das Entlüftungsventil steuernde Auslöseeinrichtung, wobei das Entlüftungsventil und/oder die Auslöseeinrichtung relativ zu der Richtung des Löschfluideinlasses und des Löschfluidauslasses seitlich abgewinkelt, vorzugsweise rechtwinklig ausgerichtet und am Ventilkörper angeordnet sind. Das Entlüftungsventil ist an dem Ventilkörper in einem Entlüftungskanal montiert. Durch die seitliche Anordnung der Auslöseeinrichtung und des Entlüftungsventils wird eine deutlich reduzierte Bauhöhe erreicht. Die Auslöseeinrichtung ist vorzugsweise elektrisch, manuell, pneumatisch, oder mittels einer Kombinationen aus mehreren oder sämtlichen dieser Arten betätigbar.

Das Schnellöffnungsventil des erfindungsgemäßen Löschfluidbehälters umfasst weiter vorzugsweise ein Gerät zur Überwachung, ob eine Auslöseeinrichtung montiert ist. Beispielsweise ist das Gerät mit einer mechanischen Endlagenschalterüberwachung versehen. Hierbei wird mittels eines mechanisch beweglichen Tasters überwacht, ob die Auslöseeinrichtung montiert ist. Bei der Montage wird der Taster ausgelenkt, sobald die Auslöseeinrichtung in der designierten Position montiert ist. Die Tasterposition wird beispielsweise manuell/visuell und/oder elektronisch überwacht.

Die Auslöseeinrichtung ist vorzugsweise mittels einer Steckverbindung montiert. Die Steckverbindung wird beispielsweise eines Splints gesichert, der in zwei, vorzugsweise halbrundförmigen, Nuten aufgenommen ist, wobei jeweils eine der Nuten in der Auslöseeinrichtung und eine an dem Ventilkörper, vorzugsweise an einer Aufnahme für die Auslöseeinrichtung, ausgebildet sind, und in montierter Position der Auslöseeinrichtung einander gegenüberliegend angeordnet sind, so dass der Splint eingeführt werden kann. Das Entfernen der Auslöseeinrichtung vom Schnellöffnungsventil erfordert dann ein Entfernen des Splints, so dass die beiden Nuten relativ zueinander wieder verschoben werden können.

In einer weiteren Ausführungsform des Löschfluidbehälters, , weist das Schnellöffnungsventil einen Entleerungskanal zum Ablassen von Löschfluid aus der Kolbenkammer in Richtung des Löschfluideinlasses des Schnellöffnungsventils auf, wobei der Entleerungskanal relativ zu dem Löschfluideinlass des Schnellöffnungsventils parallel oder in einem spitzen Winkel ausgerichtet ist, und in dem Entleerungskanal ein zwischen einer Sperrstellung und einer Freigabestellung mittels Schwerkraft bewegliches Verschlusselement angeordnet ist. Unter einem spitzen Winkel wird hierbei ein Winkel zwischen dem Entleerungskanal und der Ausrichtung des Löschfluideinlasses von > 0° und < 90° verstanden. Das Verschlusselement ist infolge Schwerkraft vorzugsweise frei beweglich, zumindest frei verschieblich in dem Entleerungskanal angeordnet. Die Kombination der Ausrichtung des Entleerungskanals und das Vorsehen des beweglichen Verschlusselements hat folgenden technischen Effekt: Im liegenden Transport eines mit dem Schnellöffnungsventil versehenen Löschfluidbehälters kann sich aufgrund der fluidleitenden Verbindung zwischen dem Löschfluideinlass und der Kolbenkammer Löschfluid in der Kolbenkammer ansammeln. Ohne einen Entleerungskanal kann in Extremsituationen das sich in der Kolbenkammer sammelnde Löschfluid ein vollständiges Öffnen des Ventilkolbens verhindern, so dass ein erhöhter Strömungswiderstand und damit einhergehend Druckverlust des Schnellöffnungsventils auftritt. Es entstünde ohne Entleerungskanal dann das Risiko einer Herabsetzung der Öffnungsgeschwindigkeit und somit einer potentiellen Störung der Schnellöffnungsfunktion. Wird der Löschfluidbehälter aber nach seinem potenziell liegenden Transport in eine aufrechte Stellung verbracht, die dem Regelfall der Aufbewahrung des Löschfluidbehälters am Einsatzort entspricht, sinkt das Verschlusselement in Folge der Schwerkraft aufgrund seines Eigengewichts in die Freigabestellung, in welche der Entleerungskanal fluidleitend mit dem Löschfluideinlass verbunden ist.

Dadurch kann das Löschfluid, was sich etwaig zwischenzeitlich in der Kolbenkammer angesammelt hat, durch den Entleerungskanal ablaufen. Wird allerdings durch die Auslöseeinrichtung das Schnellöffnungsventil ausgelöst und die Kolbenkammer entlüftet, (und dadurch der Ventilkolben in die Freigabestellung bewegt) wird das Verschlusselement aufgrund des einlassseitig anstehenden Fluiddrucks aus der Freigabestellung heraus und in die Sperrstellung gedrückt. Das Verschlusselement ist dazu eingerichtet, in der Sperrstellung fluiddicht an einem korrespondierend ausgebildeten Sitz anzuliegen. Vorzugsweise ist der Sitz für das Verschlusselement als kegelförmige Fläche, vorzugsweise in dem Entleerungskanal, ausgebildet, und das Verschlusselement ist zumindest teilweise elastisch verformbar ausgebildet, beispielsweise mittels eines Elastomers. Das Verschlusselement ist besonders bevorzugt als Kugel ausgebildet, um ein reibungsarmes Bewegen innerhalb des Entleerungskanals mit gleichzeitig minimaler Verkantungsgefahr zu erreichen.

In einer Weiterbildung ist an dem Schnellöffnungsventil in dem Kolbengehäuse eine Überdruckleitung vorgesehen, welche sich von der Seite des Löschfluideinlasses zur Seite des Löschfluidauslasses erstreckt, und mittels einer Überdruck-Sicherheitseinrichtung gegen Fluiddurchtritt verschlossen und dazu eingerichtet ist, nach Auslösen der Überdruck-Sicherheitseinrichtung den Überdruck in Richtung des Löschfluidauslasses abzuleiten. Der Erfindung liegt die Erkenntnis zugrunde, dass mit dem Auslösen der Überdruck-Sicherheitseinrichtung nunmehr kein Löschfluid mehr in die Umgebung im Bereich des Schnellöffnungsventiles abgelassen sondern vorzugsweise in Richtung des Löschfluidauslasses und damit in einen dem Schnellöffnungsventil nachgeschalteten Löschmittelpfad, insbesondere in eine an dem Schnellöffnungsventil angeschlossenen Löschfluidleitung abgeführt wird. Ein unkontrollierter Austrag nach außerhalb des Schnellöffnungsventils, und eine mögliche damit verbundene Gefährdung von Personen wie im Stand der Technik ist damit vermieden. Zudem entsteht üblicherweise dann ein kritischer Druck an der Überdruck-Sicherheitseinrichtung, wenn beispielsweise der Löschmittel- bzw. Löschfluidbehälter durch bzw. ein Feuer erhitzt und dieser damit zusätzlich unter Druck gesetzt wird. Das nach Auslösen der Überdruck-Sicherheitseinrichtung abströmende Löschmittel bzw. Löschfluid wird dann nicht unkontrolliert ausgebeben, sondern gelangt über die Löschfluidleitung in eine daran angeschlossene Sprinkleranlage, die dann das Löschfluid über die Düsen der Sprinkleranlage gleichmäßig in den Raum ausgibt. Vorzugsweise sind der Löschfluideinlass und der Löschfluidauslass im Wesentlichen parallel zueinander ausgerichtet.

Das Schnellöffnungsventil gemäß dem zweiten und dritten Aspekt umfasst ferner vorzugsweise eine, mehrere oder sämtliche der vorstehend beschriebenen bevorzugten Ausführungsformen zum Schnellöffnungsventil gemäß dem ersten.

Die Erfindung löst die ihr zugrunde liegende Aufgabe bei einem eingangs bezeichneten Löschfluidbehälter, welcher eine Löschfluidkammer, einen Löschfluidauslass und ein Schnellöffnungsventil aufweist, das am Löschfluidauslass montiert ist, indem das Schnellöffnungsventil nach einer der vorstehend beschriebenen bevorzugten Ausführungsformen bzw. Aspekte ausgebildet ist. Bezüglich der Vorteile und bevorzugten Ausführungsformen des Löschfluidbehälters wird auf die obigen Ausführungen verwiesen.

Vorzugsweise weist das Schnellöffnungsventil einen Ventilkörper auf, der innenliegend in dem Löschfluidauslass des Löschfluidbehälters montiert ist. Alternativ weist das Schnellöffnungsventil einen Ventilkörper auf, der nur teilweise innenliegend oder außen an dem Löschfluidauslass montiert ist, vorzugsweise jeweils mittels entsprechender Gewinde.

Weiter vorzugsweise ist ein Steigrohr fluidleitend mit dem Löschfluideinlass des Schnellöffnungsventils verbunden und innerhalb der Löschfluidkammer angeordnet.

Die Erfindung wird im Folgenden unter Bezugnahme auf die beigefügten Figuren anhand eines bevorzugten Ausführungsbeispiels beschrieben. Hierbei zeigen:
- Figur 1: eine Querschnittsansicht durch ein Schnellöffnungsventil gemäß einem bevorzugten Ausführungsbeispiel in einem ersten Betriebszustand,
- Figur 2: eine Querschnittsansicht durch das Schnellöffnungsventil gemäß Figur 1 in einem zweiten Betriebszustand,
- Figur 3: eine Detailansicht X des Schnellöffnungsventils gemäß den Figuren 1 und 2, und
- Figur 4: eine schematische Querschnittsansicht eines Löschfluidbehälters mit dem Schnellöffnungsventil gemäß den Figuren 1 bis 3.

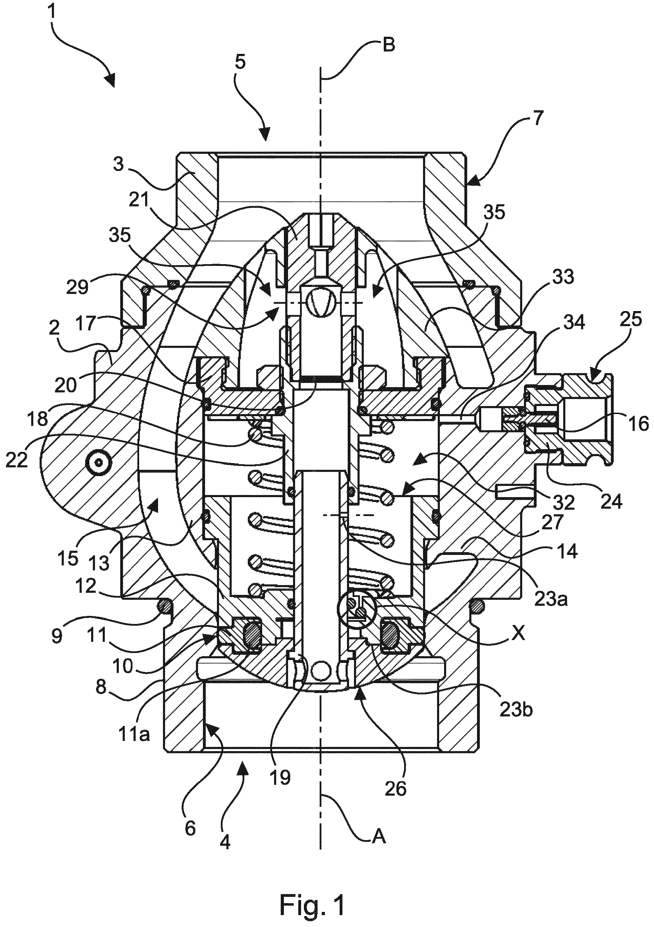

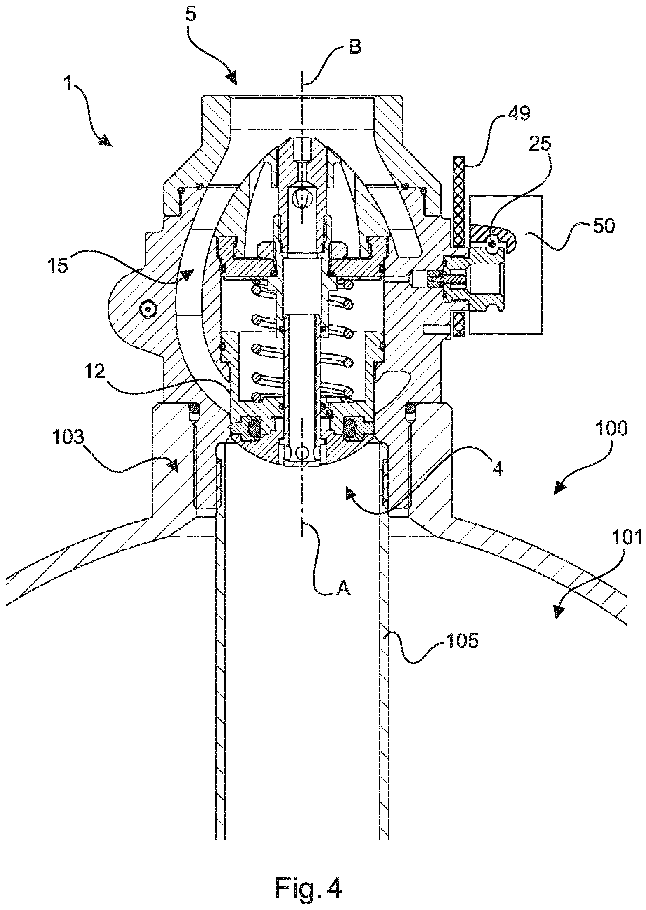

In Figur 1 ist zunächst ein Schnellöffnungsventil 1 dargestellt, welches gemäß einem bevorzugten Ausführungsbeispiel der Erfindung ausgebildet ist. Das Schnellöffnungsventil 1 weist einen Ventilkörper 2 auf. An dem Ventilkörper 2 ist vorzugsweise ein Ventildeckel 3 befestigt. Das Schnellöffnungsventil 1 weist einen Löschfluideinlass 4 in Richtung einer Achse A und einen Löschfluidauslass 5 in Richtung einer Achse B auf, wobei der Löschfluidauslass 5 in diesem Fall vorzugsweise am Ventildeckel 3 ausgebildet ist. Auf der Seite des Löschfluideinlasses 4 weist das Schnellöffnungsventil 1 einen Befestigungsabschnitt 6 zum Anschluss eines Steigrohres 105 (Figur 4) auf. An der Seite des Löschfluidauslasses 5 weist das Schnellöffnungsventil 1 einen Befestigungsabschnitt 7 für eine Löschleitung auf. Jener Befestigungsabschnitt 7 kann optional an der Außen- oder Innenseite des Ventildeckels 3 bzw. Ventilkörpers 2 ausgebildet sein. An der Seite des Löschfluideinlasses 4 ist ferner vorzugsweise ein Anschlussgewinde 8 zum Anschluss eines Löschfluidbehälters 100 (Figur 4) ausgebildet, sowie vorzugsweise ein Dichtungselement 9.

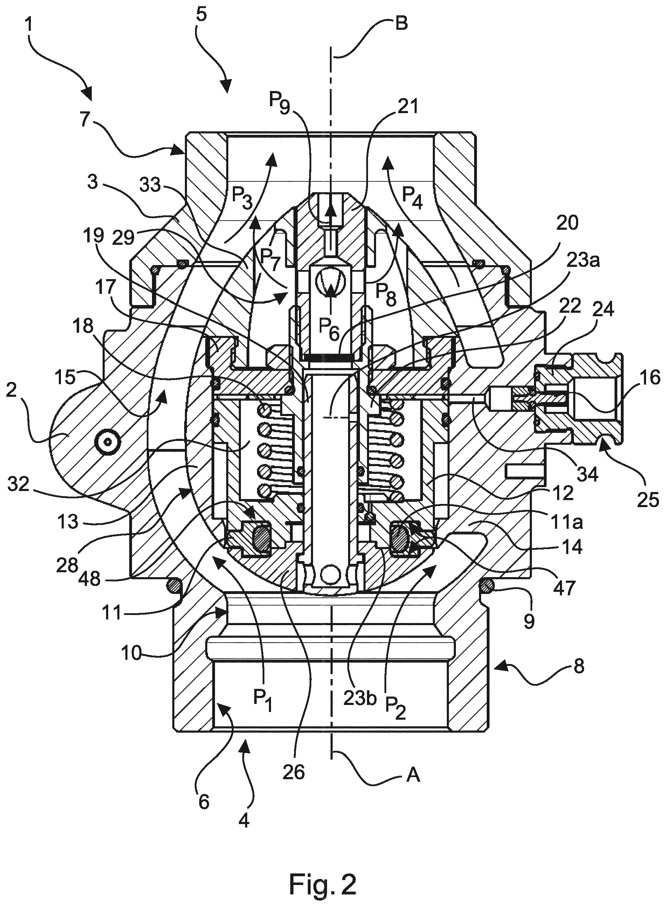

Das Schnellöffnungsventil 1 weist einen Ventilsitz 10 auf. Im in Figur 1 gezeigten Sperrzustand des Schnellöffnungsventils 1 befindet sich ein Radialdichtelement 11 in fluiddichter Anlage mit dem Ventilsitz 10. Der Ventilsitz 10 ist als Radialdichtsitz ausgebildet. Das Radialdichtelement 11 wird im Wesentlichen formschlüssig in dem Ventilkolben 12 gehalten, vgl. Erläuterungen zu Figur 2. Der Ventilkolben 12 ist in der in Figur 1 gezeigten Sperrstellung fluiddicht in Anlage mit dem Ventilsitz 10.

Das Radialdichtelement 11 weist an seiner radial inneren Seite ein sekundäres Radialdichtelement 11a auf.

Der Ventilkolben 12 ist in einem Kolbengehäuse 13 linear beweglich angeordnet. Das Kolbengehäuse 13 ist mittels mindestens eines Haltestegs 14 mit dem Ventilkörper 2 verbunden. Vorzugsweise ist der Haltesteg 14 strömungsoptimiert ausgebildet.

Zwischen dem Löschfluideinlass 4 und dem Löschfluidauslass 5 ist eine Strömungskammer 15 ausgebildet. Das Kolbengehäuse 13 ist innerhalb der Strömungskammer 15 derart angeordnet, dass sich zwischen dem Kolbengehäuse 13 und dem Ventilkörper 2 ein im Wesentlichen ringförmiger Strömungskanal ausbildet, unterbrochen lediglich durch den mindestens einen Haltesteg 14.

Im Inneren des Kolbengehäuses ist ein Deckel 17 angeordnet, der eine Kolbenkammer 32 begrenzt und fluiddicht verschließt. An dem Deckel 17 stützt sich ein Rückstellmittel 18 in Form einer vorgespannten Feder ab, welches den Ventilkolben 12 in Richtung der gezeigten Sperrstellung auslenkt.

Im Inneren des Ventilkolbens 12 ist ein Versorgungskolben 19 angeordnet. Der Versorgungskolben 19 ist fluidleitend mit dem Löschfluideinlass 4 verbunden.

Der Versorgungskolben 19 ist verschiebbar in einer Aufnahme 22 angeordnet, die ihrerseits an dem Deckel 17 befestigt ist. Zwischen der Aufnahme 22 und einem Niederhalter 21 ist eine Sicherheitseinrichtung 20 gegen Überdruck in Form einer Berstscheibe angeordnet. In dem Versorgungskolben 19 ist eine Druckausgleichsleitung 23a vorgesehen, die das Innere des Versorgungskolbens 19 mit der Kolbenkammer 32 verbindet.

Von der Kolbenkammer 32 aus erstreckt sich ein Entlüftungskanal 34 zu einem seitlich am Ventilkörper 2 angebrachten Entlüftungsventil 16 hin, welches in der gezeigten Stellung verschlossen ist. Ebenfalls seitlich angeordnet und den Entlüftungskanal radial umgebend ist eine Aufnahme 24 für eine Auslöseeinrichtung vorgesehen. Die Aufnahme 24 weist einen Schnellverschluss 25 zum Befestigen einer Auslöseeinrichtung 50 (Figur 4) auf.

Der Ventilkolben 12 ist als Differenzdruckkolben wie folgt ausgebildet: Der Ventilkolben 12 weist eine erste Kolbenfläche 26 auf, die dem Löschfluideinlass 4 zugewandt ist. Ferner weist der Ventilkolben 12 eine zweite Kolbenfläche 27 auf, die dem Inneren der Kolbenkammer 32 zugewandt ist. Die senkrecht zur Richtung der Achse A des Löschfluideinlasses 4 projizierte Fläche der zweiten Kolbenfläche 27 ist größer als die projizierte Fläche der ersten Kolbenfläche 26. Da die Kolbenkammer 32 mit dem Löschfluideinlass 4 mittels der Druckausgleichsleitung 23a durch den Verbundkolben 19 hindurch kommunizierend verbunden ist, wirkt bei Überdruck eine resultierende Kraft in Richtung der in Figur 1 gezeigten Sperrstellung auf den Ventilkolben 12. Hierdurch ist es möglich, das Rückstellmittel 18 vergleichsweise schwach auszubilden, um beispielsweise gegen ungewollte Erschütterung zu sichern.

Die Funktion der Sicherheitseinrichtung 20 gegen Überdruck ist im Wesentlichen die Folgende: Steht am Löschfluideinlass 4 ein Überdruck an, der unzulässig hoch ist, löst die Sicherheitseinrichtung 20 aus und gibt einen Fluidfluss frei. Löschfluid kann durch den Versorgungskolben 19 hindurchströmen, und tritt durch eine oder mehrere Durchgänge 29 und ein oder mehrere Bohrungen 35 in einem Abströmkörper 33 des Kolbengehäuses 13 hindurch bis zum Löschfluidauslass 5 des Schnellöffnungsventils 1. Dies geschieht ungeachtet der Stellung des Ventilkolbens 12 und des Schaltzustandes des Entlüftungsventils 24. Das Löschfluid entweicht im Wesentlichen in Richtung der in Figur 2 gezeigten Pfeile P₆, P₇, P₈ und P₉ im Fall des Auslösens der Sicherheitseinrichtung 20. Der Versorgungskolben 19, die Aufnahme 22 und der Niederhalter 21 bilden gemeinsam mit den Durchgängen und den Bohrungen 35 im Abströmkörper 33 eine Überdruckleitung 30 aus, durch die das Löschfluid von der Seite des Löschfluideinlasses 4 bis zur Seite des Löschfluidauslasses 5 hin strömt, sofern die Sicherheitseinrichtung 20 auslöst. Unter weiterer Bezugnahme auf Figur 2 wird im Folgenden der Betrieb des Schnellöffnungsventils 1 erläutert. Wird ausgehend von dem Sperrzustand gemäß Figur 1 das Entlüftungsventil 24 betätigt, sinkt der Druck in der Kolbenkammer 32 rasch. Der Querschnitt des Entlüftungskanals 34 ist deutlich größer als der Querschnitt der Druckausgleichsleitung 23a. Infolgedessen wird die den Ventilkolben 12 in der Sperrstellung haltende resultierende Kraft aufgrund des Differenzdrucks zwischen den beiden Kolbenflächen 26, 27 (Figur 1) nicht länger aufrechterhalten, und der Ventilkolben 12 weicht aus der Sperrstellung gemäß Figur 1 in die Freigabestellung gemäß Figur 2 zurück.

Das Radialdichtelement 11 ist nun innerhalb des Kolbengehäuses 13 verdeckt angeordnet, und Löschfluid kann entlang der Pfeile P₁, P₂ in die Strömungskammer 15 eintreten, umströmt den mindestens einen Haltesteg 14 und tritt in Richtung der Pfeile P₃, P₄ schlussendlich koaxial in Richtung der Achse B aus dem Löschfluidauslass 5 aus dem Schnellöffnungsventil wieder heraus. Hier wird besonders der Vorteil einer koaxialen Anordnung des Löschfluideinlasses 4, der in Richtung der Achse A ausgerichtet ist, und des Löschfluidauslasses 5, der in Richtung der Achse B ausgerichtet ist deutlich. Die aufgrund des Löschfluidaustrags erzeugte Kraft wirkt in Richtung des Löschfluidbehälters. Unter der Voraussetzung, dass der Löschfluidbehälter ebenfalls im Wesentlichen koaxial zu der Achse A bzw. B ausgerichtet ist, wird diese Kraft direkt in die Standfläche des Löschfluidbehälters weitergeleitet, und es entsteht kein Kippmoment bzw. keine seitliche Bewegung des Behälters.

Im geöffneten Zustand wird aufgrund des nach wie vor vorherrschenden Überdrucks auf Seiten des Löschfluideinlasses 4 das (schwache) Rückstellmittel 18 in komprimierter Stellung gehalten. Dieser Zustand bleibt solange erhalten, bis fast das gesamte Löschfluid aus dem Löschfluidbehälter entwichen ist. Erst gegen Ende des Entleerungsvorgangs ist das Rückstellmittel 18 stark genug, um den Ventilkolben 12 aus seiner in Figur 2 gezeigten Stellung heraus in Richtung der Sperrstellung zu drücken. Die primäre Funktion des Rückstellmittels 18 ist es erfindungsgemäß, das Schnellöffnungsventil in drucklosem Zustand bzw. bei lediglich geringem Restdruck, insbesondere unterhalb von 2 bar Überdruck, vorzugsweise im Bereich von 1 bar +/- 30% Überdruck, auf der Seite des Löschfluideinlasses 4 zuverlässig zu schließen, um ein Eindringen von Schmutz und Feuchtigkeit in das Innere des Löschfluidbehälters 100 (Figur 4) zu verhindern.

Aus Figur 2 ist ferner ersichtlich, dass das Radialdichtelement 11 zwei Vorsprünge 47 aufweist. Der Ventilkolben 12 weist eine korrespondierende Ausnehmung 48 zur Aufnahme der Vorsprünge 47 auf. Die Vorsprünge 47 und Ausnehmung 48 wirken in Form einer Hinterschneidung zusammen, die das Radialdichtelement 11 verliersicher am Ventilkolben 12 halten. Vorzugsweise weist das Kolbengehäuse 13 eine zweite Druckausgleichsleitung 23b auf, mittels welcher die Ausnehmung 48 und dasin der Ausnehmung 48 angeordnete Radialdichtelement 11 von radial innen her mit dem Druck des Löschfluids von der Seite des Löschfluideinlasses 4 her druckbeaufschlagt wird. Die Druckbeaufschlagung von dieser Seite sorgt für einen Anpressdruck des radialen Dichtelements 11 gegen den Ventilsitz 10 in der Sperrstellung gemäß Figur 1. Zur besseren Abdichtung hiergegen in radialer Richtung ist das sekundäre Radialdichtelement 11a aus einem nachgiebigeren Material als das Radialdichtelement 11 ausgebildet. Das Radialdichtelement 11 ist vorzugsweise aus Graphit oder einem verschleißfesten Elastomer, beispielsweise Polyurethan ausgebildet, während das sekundäre Radialdichtelement 11a vorzugszuweise aus einem weichen Elastomer, beispielsweise EPDM (Ethylen-Propylen-Dien-Kautschuk) oder NBR-Kautschuk (Nitril-Butadien-Kautschuk) ausgebildet ist.

Hinsichtlich der Form des Ventilgehäuses 13 im Zusammenspiel mit dem Ventilkörper 2 wird auf Folgendes hingewiesen: In der in Figur 2 gezeigten Freigabestellung gehen die Oberfläche 26 des Ventilkolbens, welche konvex gewölbt ist, und die umgebende Oberfläche 28 des Kolbengehäuses 13, welche ebenfalls konvex gewölbt ist, möglichst glatt ineinander über, so dass infolge des Vorbeiströmens des Löschfluids in Richtung der Pfeile P₁, P₂ keine zusätzlichen Verwirbelungen oder zumindest möglichst geringe Verwirbelungen erzeugt werden. Die Oberfläche 28 erstreckt sich fließend auch über den Abströmkörper 33 bis zum Zusammenführen der Löschfluidströmung (Pfeile P₃, P₄) in den Ventildeckel 3 hinein. Dies trägt dazu bei, den Strömungswiderstand und somit den Druckverlust zwischen dem Löschfluideinlass 4 und dem Löschfluidauslass 5 zu begrenzen.

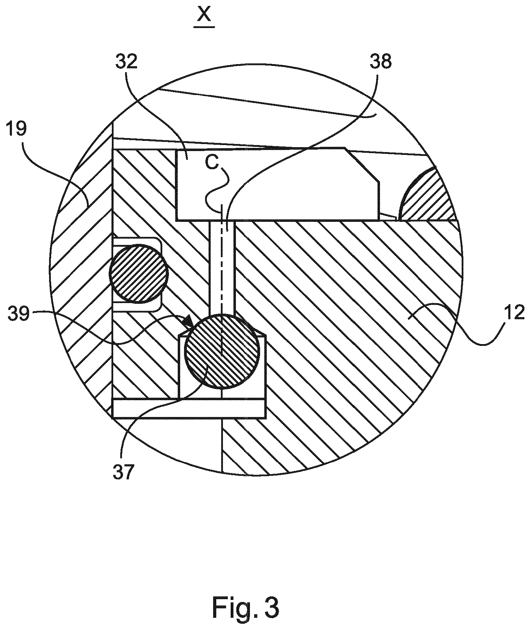

Das in Figur 1 angedeutete Detail X ist in Figur 3 in vergrößertem Maßstab gezeigt. Ein Entleerungskanal 38 erstreckt sich von der Kolbenkammer 32 aus in Richtung des Löschfluideinlasses 4 (nicht dargestellt) in Richtung einer Achse C. Die Achse C ist im vorliegenden Ausführungsbeispiel parallel, vorzugsweise alternativ in einem spitzen Winkel zu den Achsen A, B ausgerichtet. In den Entleerungskanal 38 ist ein Kegelsitz 39 ausgebildet, sowie ein Verschlusselement 37 angeordnet, welches im Wesentlichen frei im Entleerungskanal 38 bewegbar ist. Das Verschlusselement 37 ist vorliegend als teilelastische Kugel ausgebildet, die in der in Figur 3 gezeigten Stellung fluiddicht gegen den Kegelsitz 39 im Entleerungskanal 38 gepresst wird.

Sofern der Druck in der Kolbenkammer 32 mit dem Druck am Löschfluideinlass 4 (nicht dargestellt) ausgeglichen ist, also im Ruhestand des Löschfluidbehälters, sinkt das Verschlusselement 37 in Folge seiner Schwerkraft aus der in Figur 3 gezeigten Stellung heraus, sobald der Löschfluidbehälter in eine aufrechte Stellung gebracht wird. Löschfluid, welches sich zuvor in der Kolbenkammer 32, beispielsweise aufgrund liegenden Transports, gesammelt hat, kann sodann durch den geöffneten Entleerungskanal 38 in Richtung des Löschfluideinlasses 4 entweichen. Bei einem Auslösen des Entlüftungsventils 16 (Figuren 1, 2) sinkt der Druck in der Kolbenkammer 32 rapide, und durch die entstehende Druckdifferenz wird das Verschlusselement 37 gegen den Kegelsitz 39 gepresst, so dass ein ungewollter Rückfluss von Löschfluid während des Auslösevorgangs vermieden wird. Der Druckausgleich im Ruhezustand findet über die Druckausgleichsleitung 23a in dem Versorgungskolben 19 statt. Zwischen Versorgungskolben 19 und Ventilkolben 12 ist ein Ringspalt ausgebildet, durch den das Löschfluid in Richtung des Fluideinlasses 4 ablaufen kann.

Nachdem die Figuren 1 bis 3 ein Schnellöffnungsventil 1 nach dem bevorzugten Ausführungsbeispiel der Erfindung isoliert gezeigt haben, wird das Schnellöffnungsventil 1 gemäß jenen Figuren in Figur 4 im Zusammenhang mit einem Löschfluidbehälter 100 gezeigt. Der Löschfluidbehälter 100 weist eine Löschfluidkammer 101 auf, in der ein druckbeaufschlagtes Löschfluid bevorratet ist. Ferner weist der Löschfluidbehälter einen Löschfluidauslass 103 auf, der mit dem korrespondierenden Anschluss eines Schnellöffnungsventils 1 gemäß der Erfindung verbunden ist. An dem Löschfluideinlass 4 des Schnellöffnungsventils 1 ist ein Steigrohr 105 befestigt, welches sich in die Löschfluidkammer 101 hinein erstreckt. Alternativ könnte das Steigrohr 105 auch an dem Löschfluidbehälter 100 selbst befestigt sein.

In den Figuren 1 bis 3 waren die folgenden Teile noch nicht gezeigt, hier sind sie aber im Zusammenbau mit dem Schnellöffnungsventil 1 dargestellt: An dem Entlüftungsventil 24 ist mittels des Schnellverschlusses 25 eine Auslöseeinrichtung 50 befestigt, vorzugsweise mittels einer splintgesicherten Steckverbindung. Ferner ist an dem Schnellöffnungsventil 1 ein Überwachungsgerät 49 zum Überprüfen des Vorhandenseins der Auslöseeinrichtung 50 montiert.

Wie sich aus Figur 4 anschaulich entnehmen lässt, ist durch die koaxiale Anordnung von Löschfluideinlass 4 und Löschfluidauslass 5 des Schnellöffnungsventils 1, vergleiche die Achsen A,B, eine Anordnung geschaffen, in der das Löschfluid das Schnellöffnungsventil 5 in der gleichen Richtung verlässt, wie es auch den Löschfluidbehälter 100 verlässt. Seitliche Bewegungsimpulse werden hierdurch mindestens weitestgehend vermieden. Außerdem wird durch die seitliche Anbringung der Auslöseeinrichtung 50 eine in der Höhe sehr platzsparende Bauweise erreicht, die zusätzlich durch das Unterbringen des Ventilkolbens 12 im Inneren der Strömungskammer 15 unterstützt wird.

### Bezugszeichenliste

- 1: Schnellöffnungsventil
- 2: Ventilkörper
- 3: Ventildeckel
- 4: Löschfluideinlass
- 5: Löschfluidauslass
- 6: Befestigungsabschnitt Steigrohr
- 7: Befestigungsabschnitt Löschleitung
- 8: Anschlussgewinde Löschfluidbehälter
- 9: Dichtung für Löschfluidbehälter
- 10: Ventilsitz
- 11: Radialdichtelement
- 11a: Sekundäres Radialdichtelement
- 12: Ventilkolben
- 13: Kolbengehäuse
- 14: Haltesteg
- 15: Strömungskammer
- 16: Entlüftungsventil
- 17: Deckel
- 18: Rückstellmittel
- 19: Versorgungskolben
- 20: Sicherheitseinrichtung gegen Überdruck
- 21: Niederhalter
- 22: Aufnahme
- 23a,b: Druckausgleichsleitung
- 24: Aufnahme für Auslöseeinrichtung
- 25: Schnellverschluss für Auslöseeinrichtung
- 26: Erste Kolbenfläche
- 27: Zweite Kolbenfläche
- 28: Oberfläche Kolbengehäuse
- 29: Durchgang
- 30: Überdruckleitung
- 32: Kolbenkammer
- 33: Abströmkörper
- 34: Entlüftungskanal
- 35: Bohrung
- 37: Verschlusselement
- 38: Entleerungskanal
- 39: Kegelsitz
- 47: Vorsprung
- 48: Ausnehmung
- 49: Überwachungsgerät
- 50: Auslöseeinrichtung
- 100: Löschfluidbehälter
- 101: Löschfluidkammer
- 103: Löschfluidauslass Löschfluidbehälter
- 105: Steigrohr
- A,B,C: Achsen
- X: Detail

## Patentansprüche

1. Löschfluidbehälter (100), mit
- einer Löschfluidkammer (101),
- einem Löschfluidauslass (103), und
- einem Schnellöffnungsventil (1), das am Löschfluidauslass (103) montiert ist, wobei das Schnellöffnungsventil (1)
- einen Löschfluideinlass (4),
- einen Löschfluidauslass (5),
- eine Strömungskammer (15), die sich vom Löschfluideinlass (4) zum Löschfluidauslass (5) erstreckt,
- einen Ventilkolben (12),
- einen Ventilsitz (10), wobei der Ventilkolben (12) reversibel zwischen einer Freigabestellung und einer Sperrstellung derart hin- und herschaltbar ist, dass der Ventilkolben (12) und der Ventilsitz (10) in der Sperrstellung fluiddicht aneinander anliegen, und in der Freigabestellung voneinander beabstandet sind, so dass der Löschfluideinlass (4) und der Löschfluidauslass (5) fluidleitend miteinander verbunden sind,
wobei der Ventilkolben (12) innerhalb der Strömungskammer (15) angeordnet und im Wesentlichen parallel, insbesondere koaxial zu dem Löschfluideinlass (4) und Löschfluidauslass (5) bewegbar ist, und
- einen Kolbengehäuse (13) aufweist, in dem der Ventilkolben (12) beweglich, insbesondere verschiebbar, gelagert ist, wobei das Kolbengehäuse (13) derart in der Strömungskammer (15) angeordnet ist, dass es in der Freigabestellung des Ventilkolbens (12) von Löschfluid umströmt wird,
wobei der Löschfluideinlass (4) und der Löschfluidauslass (5) im Wesentlichen parallel zueinander ausgerichtet sind, wobei der Ventilkolben (12) als Differenzdruckkolben ausgebildet ist, wobei eine dem Löschfluideinlass (4) zugewandte Fläche des Ventilkolbens (12) eine erste Fläche ist und der Ventilkolben (12) eine dem Löschfluideinlass (4) abgewandte zweite Fläche aufweist, welche eine Kolbenkammer (32) begrenzt, die mittels einer Druckausgleichsleitung (23a) mit dem Löschfluideinlass (4) verbunden ist.

2. Löschfluidbehälter (100) nach Anspruch 1,
mit einem Rückstellmittel (18, 26, 27), welches mit dem Ventilkolben (12) wirkverbunden und dazu eingerichtet ist, eine Rückstellkraft in Richtung der Sperrstellung auf den Ventilkolben (12) aufzubringen.

3. Löschfluidbehälter (100) nach Anspruch 1 oder 2,
**dadurch gekennzeichnet, dass** der Löschfluideinlass (4) und der Löschfluidauslass (5) koaxial angeordnet sind.

4. Löschfluidbehälter (100) nach einem der vorstehenden Ansprüche,
wobei das Kolbengehäuse (13) vorzugsweise mittels mindestens eines Haltestegs fest mit dem Ventilkörper (2) verbunden ist.

5. Löschfluidbehälter (100) nach einem der vorstehenden Ansprüche,
wobei der Ventilkolben (12) eine dem Löschfluideinlass (4) zugewandte Fläche (26) aufweist, die in der Freigabestellung nicht aus der den Ventilkolben (12) umgebenden Fläche (28) des Kolbengehäuses vorsteht,
wobei vorzugsweise die dem Löschfluideinlass (4) zugewandte Fläche (26) des Ventilkolbens (12) konvex gewölbt ist,

6. Löschfluidbehälter (100)nach Anspruch 5,
wobei das Kolbengehäuse (13) abschnittsweise oder vollständig konvex gewölbt ist, vorzugsweise eine tropfenförmige äußere Kontur aufweist, und/oder die Strömungskammer (15) abschnittsweise oder vollständig konkav gewölbt ist, vorzugsweise korrespondierend zu der konvexen Wölbung des Kolbengehäuses (13).

7. Löschfluidbehälter (100) nach einem der vorstehenden Ansprüche,
wobei der Ventilsitz (10) eine Radialsitzfläche aufweist, und der Ventilkolben (12) ein Radialdichtelement (11) aufweist, welches dazu eingerichtet ist, in der Sperrstellung fluiddicht an der Radialsitzfläche des Ventilsitzes (10) anzuliegen,

8. Löschfluidbehälter (100) nach Anspruch 7,
wobei das Radialdichtelement (11) vorzugsweise mindestens einen sich axial erstreckenden Vorsprung (47) aufweist, und der Ventilkolben (12) mindestens eine korrespondierende, sich axial erstreckende Ausnehmung (48) aufweist, in der der Vorsprung (47) aufgenommen ist,
wobei die Ausnehmung (48) weiter vorzugsweise mittels einer Druckausgleichsleitung (23b) mit dem Löschfluideinlass (4) verbunden ist.

9. Löschfluidbehälter (100) nach Anspruch 7 oder 8,
wobei das Radialdichtelement (11) in der Freigabestellung des Ventilkörpers (12) vollständig innerhalb des Kolbengehäuses (13) angeordnet ist.

10. Löschfluidbehälter (100) nach einem der vorstehenden Ansprüche,
wobei in dem Kolbengehäuse (13) eine Überdruckleitung (30) vorgesehen ist, welche sich von der Seite des Löschfluideinlasses (4) zur Seite des Löschfluidauslasses (5) erstreckt, und mittels einer Überdruck-Sicherheitseinrichtung (20) gegen Fluiddurchtritt verschlossen ist, wobei vorzugsweise
- die Überdruckleitung (30) dazu eingerichtet ist, nach Auslösen der Überdruck-Sicherheitseinrichtung (20) den Überdruck in Richtung des Löschfluidauslasses (5) abzuleiten, und/oder
- die Überdruck-Sicherheitseinrichtung (20) ein Berstelement ist, vorzugsweise eine Berstscheibe, welche in einem Abschnitt der Überdruckleitung (30) angeordnet ist, und/oder
- wobei der Ventilkolben (12) als Hohlkolben ausgebildet ist, und sich die Überdruckleitung (30) durch den Hohlkolben hindurch erstreckt, und/oder
- wobei das Kolbengehäuse (13) mindestens eine Aufnahme (22) für den bewegbaren Ventilkolben aufweist, wobei die Überdruckleitung (30) sich durch die Aufnahme (22) hindurch erstreckt, und/oder
- wobei die Überdruckleitung (30) einen oder mehrere Leitungsabschnitte aufweist, der oder die koaxial zur Mittenachse des Ventilkolbens (12) und/oder des Kolbengehäuses (13) verläuft oder verlaufen.

11. Löschfluidbehälter (100) nach einem der vorstehenden Ansprüche,
mit einem Entlüftungsventil (24) und einer das Entlüftungsventil (24) steuernden Auslöseeinrichtung (50), wobei das Entlüftungsventil und/oder die Auslöseeinrichtung relativ zu der Richtung des Löschfluideinlasses (4) und des Löschfluidauslasses (5) seitlich abgewinkelt, vorzugsweise rechtwinklig, am Ventilkörper angeordnet sind.

12. Löschfluidbehälter (100) nach einem der vorstehenden Ansprüche,
mit einem Gerät (49) zur Überwachung, ob eine Auslöseeinrichtung (50) montiert ist.

13. Löschfluidbehälter (100) nach einem der vorstehenden Ansprüche,
wobei die Auslöseeinrichtung (50) mittels einer Steckverbindung montiert ist.

14. Löschfluidbehälter (100)nach einem der vorstehenden Ansprüche, wobei
- der Ventilkolben (12) einen Entleerungskanal (38) zum Ablassen von Löschfluid aus der Kolbenkammer (32) in Richtung des Löschfluideinlasses (4) des Schnellöffnungsventils (1) aufweist,
- der Entleerungskanal (38) relativ zu dem Löschfluideinlass (4) des Schnellöffnungsventils (1) parallel oder in einem spitzen Winkel ausgerichtet ist, und
- in dem Entleerungskanal (38) ein zwischen einer Sperrstellung und einer Freigabestellung mittels Schwerkraft in Richtung der Freigabestellung hin und her bewegliches Verschlusselement (37) angeordnet ist.

15. Löschfluidbehälter (100) nach einem der vorstehenden Ansprüche,
wobei das Schnellöffnungsventil (1) einen Ventilkörper (2) aufweist, der innenliegend in dem Löschfluidauslass (103) montiert ist, und/oder
wobei ein Steigrohr (105) fluidleitend mit dem Löschfluideinlass (4) des Schnellöffnungsventils (1) verbunden und innerhalb der Löschfluidkammer angeordnet ist.

## Claims

1. An extinguishing fluid vessel (100), having
- an extinguishing fluid chamber (101),
- an extinguishing fluid outlet (103), and
- a quick-opening valve (1) which is installed at the extinguishing fluid outlet (103), the quick-opening valve (1) having
- an extinguishing fluid inlet (4),
- an extinguishing fluid outlet (5),
- a flow chamber (15) which extends from the extinguishing fluid inlet (4) to the extinguishing fluid outlet (5),
- a valve piston (12),
- a valve seat (10), wherein the valve piston (12) is configured to be switched reversibly back and forth between a release position and a shut-off position such that the valve piston (12) and the valve seat (10), in the shut-off position, bear against one another in fluid-tight fashion and, in the release position, are spaced apart from one another such that the extinguishing fluid inlet (4) and the extinguishing fluid outlet (5) are in fluid communication with one another,
wherein the valve piston (12) is arranged within the flow chamber (15) and is configured to move substantially parallel, in particular coaxially, with respect to the extinguishing fluid inlet (4) and extinguishing fluid outlet (5), and
- a piston housing (13) in which the valve piston (12) is mounted movably, in particular slidingly, wherein the piston housing (13) is arranged in the flow chamber (15) such that the extinguishing fluid flows around the piston housing when the valve piston (12) is in the release position,
wherein the extinguishing fluid inlet (4) and the extinguishing fluid outlet (5) are oriented substantially parallel to one another, wherein the valve piston (12) is designed as a differential pressure piston, wherein a surface of the valve piston (12) facing toward the extinguishing fluid inlet (4) is a first surface, and the valve piston (12) has a second surface facing away from the extinguishing fluid inlet (4) and delimiting a piston chamber (32) connected to the extinguishing fluid inlet (4) by means of a pressure equalization line (23a).

2. The extinguishing fluid vessel (100) as claimed in claim 1,
having a resetting means (18, 26, 27) which is operatively coupled to the valve piston (12) and which is configured to apply a resetting force to the valve piston (12) in the direction of the shut-off position.

3. The extinguishing fluid vessel (100) as claimed in claim 1 or 2, **characterized in that** the extinguishing fluid inlet (4) and the extinguishing fluid outlet (5) are arranged coaxially.

4. The extinguishing fluid vessel (100) as claimed in any one of the preceding claims,
wherein the piston housing (13) is fixedly connected to the valve body (2) preferably by means of at least one holding web.

5. The extinguishing fluid vessel (100) as claimed in any one of the preceding claims,
wherein the valve piston (12) has a surface (26) facing towards the extinguishing fluid inlet (4) and which, in the release position, does not protrude from the surface (28) which surrounds the valve piston (12), of the piston housing,
wherein preferably, that surface (26) of the valve piston (12) which faces toward the extinguishing fluid inlet (4) is convexly curved..

6. The extinguishing fluid vessel (100) as claimed in claim 5,
wherein the piston housing (13) is partially or entirely convexly curved, preferably has a droplet-shaped outer contour, and/or
wherein the flow chamber (15) is partially or entirely concavely curved, preferably correspondingly to the convex curvature of the piston housing (13).

7. The extinguishing fluid vessel (100) as claimed in any one of the preceding claims,
wherein the valve seat (10) has a radial seat surface, and the valve piston (12) has a radial sealing element (11) which is designed to bear in fluid-tight fashion against the radial seat surface of the valve seat (10) in the shut-off position.

8. The extinguishing fluid vessel (100) as claimed in claim 7,
wherein the radial sealing element (11) preferably has at least one axially extending projection (47), and the valve piston (12) has at least one corresponding, axially extending recess (48) in which the projection (47) is received,
wherein the recess (48) further preferably is connected by means of a pressure equalization line (23b) to the extinguishing fluid inlet (4).

9. The extinguishing fluid vessel (100) as claimed in claim 7 or 8,
wherein the radial sealing element (11) is arranged entirely within the piston housing (13) when the valve body (12) is in the release position.

10. The extinguishing fluid vessel (100) as claimed in any one of the preceding claims,
wherein an overpressure line (30) is provided in the piston housing (13), extending from the side of the extinguishing fluid inlet (4) to the side of the extinguishing fluid outlet (5) and being closed off against fluid leakage by means of an overpressure safety device (20), wherein preferably,
the overpressure line (30) is designed to relieve the overpressure towards the extinguishing fluid outlet (5) upon triggering of the overpressure safety device (20), and/or
- the overpressure safety device (20) is a rupturing element, preferably a rupturing disk, which is arranged in a section of the overpressure line (30), and/or
- the valve piston (12) is a hollow piston, and the overpressure line (30) extends through the hollow piston, and/or
- wherein the piston housing (13) has at least one receptacle (22) for the movable valve piston, wherein the overpressure line (30) extends through the receptacle (22), and/or
- wherein the overpressure line (30) has one or more line sections which extend(s) coaxially with respect to the central axis of the valve piston (12) and/or of the piston housing (13).

11. The extinguishing fluid vessel (100) as claimed in any one of the preceding claims,
having a ventilation valve (24), and a triggering device (50) which controls the ventilation valve (24), wherein the ventilation valve and/or the triggering device are arranged on the valve body so as to be laterally angled, preferably at right angles, relative to the direction of the extinguishing fluid inlet (4) and of the extinguishing fluid outlet (5).

12. The extinguishing fluid vessel (100) as claimed in any one of the preceding claims,
having a unit (49) for monitoring whether a triggering device (50) has been installed.

13. The extinguishing fluid vessel (100) as claimed in any one of the preceding claims, wherein the triggering device (50) is installed by means of a plug-in connection.

14. The extinguishing fluid vessel (100) as claimed in any one of the preceding claims, wherein
- the valve piston (12) has an evacuation channel (38) for the drainage of extinguishing fluid from the piston chamber (32) in the direction of the extinguishing fluid inlet (4) of the quick-opening valve (1),
- the evacuation channel (38) is oriented parallel, or at an acute angle, relative to the extinguishing fluid inlet (4) of the quick-opening valve (1), and,
- in the evacuation channel (38), there is arranged a closure element (37) which is movable back and forth between a shut-off position and a release position by means of gravitational force in the direction of the release position.

15. The extinguishing fluid vessel (100) as claimed in any of the preceding claims, wherein the quick-opening valve (1) has a valve body (2) which is installed internally in the extinguishing fluid outlet (103), and/or
wherein a riser pipe (105) is in fluid communication with the extinguishing fluid inlet (4) of the quick-opening valve (1) and is arranged within the extinguishing fluid chamber.

## Revendications

1. Réservoir de fluide d'extinction (100), avec
- une chambre (101) de fluide d'extinction,
- une sortie (103) de fluide d'extinction, et
- une vanne d'ouverture rapide (1), qui est montée sur la sortie (103) de fluide d'extinction, dans lequel
la vanne d'ouverture rapide (1) présente
- une entrée (4) de fluide d'extinction,
- une sortie (5) de fluide d'extinction,
- une chambre d'écoulement (15), qui s'étend depuis l'entrée (4) de fluide d'extinction vers la sortie (5) de fluide d'extinction,
- un piston (12) de vanne,
- un siège (10) de vanne, dans lequel le piston (12) de vanne peut être commuté de manière réversible entre une position de libération et une position de blocage de telle manière que le piston (12) de vanne et le siège (10) de vanne reposent l'un sur l'autre de manière étanche aux fluides dans la position de blocage, et sont espacés l'un de l'autre dans la position de libération, de telle sorte que l'entrée (4) de fluide d'extinction et la sortie (5) de fluide d'extinction sont reliées l'une à l'autre de manière fluidique,
dans lequel le piston (12) de vanne est disposé à l'intérieur de la chambre d'écoulement (15) et peut être déplacé sensiblement parallèlement, en particulier coaxialement à l'entrée (4) et à la sortie (5) de fluide d'extinction, et
- un boîtier de piston (13) dans lequel le piston (12) de vanne est logé de manière mobile, en particulier de manière à pouvoir coulisser, dans lequel le boîtier (13) de piston est disposé dans la chambre d'écoulement (15) de telle manière qu'il est contourné par du fluide d'extinction dans la position de libération du piston (12) de vanne,
dans lequel l'entrée (4) de fluide d'extinction et la sortie (5) de fluide d'extinction sont orientées sensiblement parallèlement l'une par rapport à l'autre, dans lequel le piston (12) de vanne est réalisé en tant que piston de pression différentielle, dans lequel une surface du piston (12) de vanne tournée vers l'entrée (4) de fluide d'extinction est une première surface et le piston (12) de vanne présente une deuxième surface opposée à l'entrée (4) de fluide d'extinction, qui délimite une chambre (32) de piston, qui est reliée à l'entrée (4) de fluide d'extinction au moyen d'une conduite (23a) d'équilibrage de pression.

2. Réservoir (100) de fluide d'extinction selon la revendication 1, avec un moyen de rappel (18, 26, 27) qui est relié fonctionnement au piston (12) de vanne et est mis au point pour appliquer une force de rappel dans la direction de la position de blocage sur le piston (12) de vanne.

3. Réservoir (100) de fluide d'extinction selon la revendication 1 ou 2, **caractérisé en ce que** l'entrée (4) de fluide d'extinction et la sortie (5) de fluide d'extinction sont disposées de manière coaxiale.

4. Réservoir (100) de fluide d'extinction selon l'une quelconque des revendications précédentes, dans lequel le boîtier (13) de piston est relié de manière solidaire au corps (2) de vanne de préférence au moyen d'au moins une nervure de maintien.

5. Réservoir (100) de fluide d'extinction selon l'une quelconque des revendications précédentes,
dans lequel le piston (12) de vanne présente une surface (26) tournée vers l'entrée (4) de fluide d'extinction, qui ne dépasse pas de la surface (28) du boîtier de piston entourant le piston (12) de vanne dans la position de libération,
dans lequel, de préférence, la surface (26) du piston (12) de vanne tournée vers l'entrée (4) de fluide d'extinction est bombée de manière convexe.

6. Réservoir (100) de fluide d'extinction selon la revendication 5, dans lequel le boîtier (13) de piston est bombé par endroits ou entièrement de manière convexe, présente de préférence un contour extérieur en forme de goutte, et/ou la chambre d'écoulement (15) est bombée par endroits ou entièrement de manière concave, de préférence de manière à correspondre au bombement convexe du boîtier (13) de piston.

7. Réservoir (100) de fluide d'extinction selon l'une quelconque des revendications précédentes,
dans lequel le siège (10) de vanne présente une surface de siège radiale, et le piston (12) de vanne présente un élément d'étanchéité radiale (11) qui est mis au point pour reposer sur la surface de siège radiale du siège (10) de vanne de manière étanche aux fluides dans la position de blocage,

8. Réservoir (100) de fluide d'extinction selon la revendication 7,
dans lequel l'élément d'étanchéité radiale (11) présente de préférence au moins une saillie (47) s'étendant axialement, et le piston (12) de vanne présente au moins un évidement (48) correspondant s'étendant axialement dans lequel la saillie (47) est logée,
dans lequel, en outre, l'évidement (48) est relié à l'entrée (4) de fluide d'extinction de préférence au moyen d'une conduite d'équilibrage de pression (23b).

9. Réservoir (100) de fluide d'extinction selon la revendication 7 ou 8,
dans lequel l'élément d'étanchéité radiale (11) est disposé, dans la position de libération du corps (12) de vanne, entièrement à l'intérieur du boîtier (13) de piston.

10. Réservoir (100) de fluide d'extinction selon l'une quelconque des revendications précédentes,
dans lequel une conduite de surpression (30) est prévue dans le boîtier (13) de piston, laquelle s'étend du côté de l'entrée (4) de fluide d'extinction vers le côté de la sortie (5) de fluide d'extinction, et est fermée pour empêcher le passage de fluide au moyen d'un dispositif de sécurité de surpression (20), dans lequel de préférence
- la conduite de surpression (30) est mise au point pour évacuer la surpression en direction de la sortie (5) de fluide d'extinction après le déclenchement du dispositif de sécurité de surpression (20), et/ou
- le dispositif de sécurité de surpression (20) est un élément d'éclatement, de préférence un disque d'éclatement, qui est disposé dans une section de la conduite de surpression (30), et/ou
- dans lequel le piston (12) de vanne est réalisé comme un piston creux, et la conduite de surpression (30) s'étend à travers le piston creux, et/ou
- dans lequel le boîtier (13) de piston présente au moins un logement (22) pour le piston de vanne mobile, dans lequel la conduite de surpression (30) s'étend à travers le logement (22), et/ou
- dans lequel la conduite de surpression (30) présente une ou plusieurs sections de conduite s'étendant coaxialement par rapport à l'axe central du piston (12) de vanne et/ou du boîtier (13) de piston.

11. Réservoir (100) de fluide d'extinction selon l'une quelconque des revendications précédentes,
avec une vanne de purge (24) et un dispositif de déclenchement (50) commandant la vanne de purge (24), dans lequel la vanne de purge et/ou le dispositif de déclenchement sont disposés latéralement de manière coudée, de préférence à angle droit, sur le corps de vanne par rapport à la direction de l'entrée (4) et de la sortie (5) de fluide d'extinction.

12. Réservoir (100) de fluide d'extinction selon l'une quelconque des revendications précédentes,
avec un appareil (49) pour surveiller si un dispositif de déclenchement (50) est monté.

13. Réservoir (100) de fluide d'extinction selon l'une quelconque des revendications précédentes,
dans lequel le dispositif de déclenchement (50) est monté au moyen d'une connexion enfichable.

14. Réservoir (100) de fluide d'extinction selon l'une quelconque des revendications précédentes, dans lequel
- le piston (12) de vanne présente un canal de vidange (38) pour évacuer le fluide d'extinction de la chambre (32) de piston en direction de l'entrée (4) de fluide d'extinction de la vanne à ouverture rapide (1),
- le canal de vidange (38) est orienté parallèlement ou selon un angle aigu par rapport à l'entrée (4) de fluide d'extinction de la vanne d'ouverture rapide (1), et
- un élément de fermeture (37), pouvant effectuer des mouvements de va-et-vient dans la direction de la position de libération entre une position de blocage et une position de libération par gravité, est disposé dans le canal de vidange (38).

15. Réservoir (100) de fluide d'extinction selon l'une quelconque des revendications précédentes,
dans lequel la vanne d'ouverture rapide (1) présente un corps (2) de vanne, qui est monté à l'intérieur dans la sortie (103) de fluide d'extinction, et/ou
dans lequel un tube montant (105) est relié fluidiquement à l'entrée (4) de fluide d'extinction de la vanne à ouverture rapide (1) et est disposé à l'intérieur de la chambre de fluide d'extinction.
